# EUROPÄISCHE PATENTANMELDUNG

(11) **EP 0 623 808 A2**
(43) Veröffentlichungstag der Anmeldung: **09.11.1994**
(21) Anmeldenummer: 94106112.9
(22) Anmeldetag: 19.04.1994
(51) Int. Cl.: G01D 5/26

(54) **Optoelektronische Sensorvorrichtung**

(30) Priorität: 20.04.1993 DE 4312692; 19.10.1993 DE 4335532
(71) Anmelder: Richter, Thomas, D-50737 Köln (DE)
(72) Erfinder: Richter, Thomas, D-50737 Köln (DE)

(57) **Zusammenfassung**

Die Erfindung betrifft optische und elektronische Komponenten, deren Aufbau und funktionale Verfahren, um Störgrößen, die auf optische Sensoren wirken, direkt über die Meßstrecke zu kompensieren oder zu unterdrücken sowie vorteilhafte Meßverfahren.

## Beschreibung

Es ist bekannt, den Lichtfluß zwischen zwei Punkten oder Flächen meßtechnisch oder steuerungstechnisch zu verwenden. Lichtschranken erkennen, ob der übertragene Lichtstrahl unterbrochen wird. Die Aussage von Lichtschranken ist im wesentlichen binär, also ja oder nein bzw. 1 oder 0 (H/L). Auch ist bekannt, einen Faden in einem Lichtstrahl zu führen, der beispielsweise aufgewickelt wird. Reißt der Faden, wird auf den Empfänger des Systems eine größere optische Leistung übertragen. Die Aussage einer solchen Anordnung ist ebenfalls binär(H/L). In der Form: ist der Faden noch im Kontrollraum?

Andere Verfahren ermitteln die Intensität der übertragenen Strahlung in Abhängigkeit einer phys. Größe. Dabei wird gezielt eine funktionale Beziehung zwischen der übertragenen Intensität und der physikalischen Größe hergestellt. Diese Aufnehmer sind für Anwendungen in der Messtechnik besonders geeignet.

In G 90 16 102.5 werden hierzu unterschiedliche Meßaufnehmervarianten vorgestellt. Eine Methode zur Erfassung von Kräften zeigt eine Blende, die abhängig von einer Kraft die Fläche zwischen einem Sender und Empfänger verändert. Dadurch wird die übertragene Leistung der Strahlung beeinflußt. So kann durch die übertragene Leistung ein eindeutiger Schluß zur aufgebrachten Kraft gefunden werden. Die Strahlungsleistung wird dazu in ein proportionales elektrisches Signal gewandelt, welches analog und/oder digital weiterverarbeitet wird.

Eine andere Ausführung in Form eines Aufnehmers für kleine Kräfte oder Stellwege wird ebenfalls im Gebrauchsmuster G 90 16 102.5 gezeigt. Dort ist eine Blende an einem frei bewegbaren Arm befestigt, die je nach Einzelfall verschiebbar angeordnet sein kann. Die Bewegung des Arms beeinflußt die Leistungsübertragung von einem Sender zu einem Empfänger.

Weitere Anordnungen in oben genannten Gebrauchsmuster zeigen unterschiedliche gelagerte oder abgestützte Lichtwellenleiter, die auch mit einer Masse M versehen sein können. Ein Merkmal dieser Anordnungen ist, daß diese Lichtwellenleiter Licht in beabstandete Lichtwellenleiter direkt einstrahlen. Wirkt eine Kraft auf die jeweiligen Lichtwellenleiter, wird der Strahlungswinkel oder Abstand etc. variiert. Die vom Empfänger-Lichtwellenleiter empfangene Leistung ist damit ein Maß der Auslenkung und somit eine Funktion der einwirkenden Kraft oder Beschleunigung.

Auf die optischen und/oder elektronischen Bauteile wirken verschiedene Störgrößen. Die Leistung der Empfänger und Sender ist besonders Temperaturabhängig. Die LED vermindert die Leistung zudem mit der Betriebszeit. Die optischen Flächen verändern ihre Durchlässigkeit durch chemische Reaktionen, Feuchte bzw. Beschlagung und ggf. auch durch Schmutzpartikel.

Die in eine elektrische Spannung umgesetzte Intensität des Lichts wird durch diese Faktoren überlagert, so daß der Meßwert bei langfristiger Messung fast nicht mehr rekonstruiert werden kann. Um die Störgrößen herauszufiltern, sind verschiedene Wege bekannt. Dabei wird auf Basis einer Referenzmessung der Meßwert mathematisch, insbesondere analog oder digital, funktional mit dem Referenzwert verknüpft. Insbesondere die Division und logarithmische Verarbeitung ist üblich, ebenfalls der Wechselseitige Bezug zu einem konstanten Wert, insbesondere einem Anfangswert. Zu beachten ist hierbei, daß der Meßwert nicht direkt die jeweilige physikalische Größe widerspiegelt.

Die vorliegende Erfindung zeigt Lösungen, die auf einfache Weise Störgrößen kompensieren und so ein sicheres Messen mit optischen Sensoren ermöglichen. Die Lösungen erlauben auch, weitere neue Meßaufgaben zu realisieren. Kennzeichnend ist, daß die, die physikalische Größe abbildende Intensität oder Spannung, mit dem Referenzwert nicht verknüpft wird und somit direkt zur Verfügung steht. Der Titel "Optoelektronische Sensoren" sagt, daß die Erfindung optische, optoelektronische und elektronische Wirkmechanismen kombiniert und zu einem leistungsfähigem Meßsystem integriert. Durch die Wahl vorteilhafter Transformationselemente werden weitere Einsatzgebiete erschlossen.

Die bekannte Lösung, die Intensität von einem Strahler (LWL) zu einem Empfänger (LWL) durch eine zwischengeführte Blende zu variieren wird zunächst verbessert. Die sich insbesondere gegenüberliegenden Flächen F1, F2 der LWL werden dazu geometrisch so gestaltet, daß der Intensitätsverlust eine lineare Funktion der jeweiligen pysikalischen Größe ist. Für die Wegmessung ergeben sich z. B. Flächen mit rechteckigem Querschnitt. Ist der Blendenweg keine lineare Funktion der phys. Größe, können andere Flächenformen gewählt werden. Anstelle von LWL können auch andere optische Baugruppen verwendet werden, z. B. Prismen oder weitere fest justierte Blenden, die die Strahlungsfläche definieren. Es besteht weiterhin die Möglichkeit, die Empfangsfäche F2 und die Sendefläche F1 auf einer Seite anzuordenen. In dem Fall zeigt die Blende anstelle der Öffnung einen Reflektor R. Die Sendefläche F1 kann gleichzeitig auch Empfangsfläche sein, wenn an einem beliebigem Punkt vor der Fläche F1 ein Strahlungsteiler verwendet wird, der die rückgeführte Strahlung auskoppelt.

Der Sender besteht aus einer Strahlereinheit, welche einen Lichtstrom bzw. eine Strahlung möglichst gleichmäßiger Dichte aussendet. Die Strahlung kann direkt oder über ein optisches Medium, z. B. Linsen, Spiegel, Prismen etc. und/oder Lichtwellenleiter in den aktiven Meßraum fließen. Der Empfänger ist ein optoelektronischer Baustein mit einer aktiven Fläche AE, der die übertragene Strahlung in ein analoges elektrisches Signal wandelt. Die Strahlung des Senders kann direkt auf die aktive Fläche des Empfängers auftreffen oder auch indirekt, indem Linsen, Spiegel, Prismen etc. und/oder LWL vorgeschaltet werden. Der aktive Meßraum kennzeichnet den Raum, in welchem die Strahlung zwischen Sender und Empfänger durch den eine Blende variiert wird. Der aktive Meßraum kann durch zusätzliche Blenden B1 vor der aktiven Blende bzw. B2 dahinter zusätzlich definiert sein. Der Begriff Blende kennzeichnet im folgendem immer die aktive Blende, wenn nicht ausdrücklich auf B1/B2 verwiesen wird.

Werden Sender und Empfänger mit Lichtwellenleiter ausgerüstet, ist der Einsatz oben genannter zusätzlicher Blenden B1 oder B2 durch die Bauform der Lichtwellenleiterbündel ersetzbar. Die LWL sind dann gezielt zu einem, z. B., rechteckigen Bündel zusammengefaßt. Durch die Auslenkung des Biegebalkens wird dann proportional zum Auslenkungsweg die Übertragungsfläche durch die Blende verändert und so die übertragene Leistung. Die im Lichtstom befindliche Kante der Blende ist in diesem Fall ebenfalls möglichst parallel zu einer Kante der LWL-Bündel.

Die Bauform der Blende kann unterschiedlich sein. Die Blende kann eine oder mehrere Öffnungen besitzen. Je nach Aufgabe kann es ausreichen, eine Blende ohne Öffnung zu verwenden, wenn insbesondere nur eine optische Flächepaarung F1/F2 Verwendung findet. In dem Fall kann zusätzlich über die Eindringtiefe der Blende in den Meßraum in Nullstellung des Systems die Empfindlichkeit angepaßt werden.

Zur Erfassung von physikalischer Größen, z. B. Schwingungen, seismischen Erregungen, Impulsen oder Beschleunigungen ist es vorteilhaft, an einem Biegetäger eine Blende anzubringen, die bei Belastung mehr oder weniger zwischen die Flächen eintaucht und die Übertragung der Strahlung so variiert. Bei besonders empfindlichen Sensoren ist der Biegeträger durch Fasern aufzubauen. Die Fasern werden einseitig insbesondere fest gelagert, am freien Ende befindet sich die Blende. Die Masse der Blende kann bezüglich der Eigendynamik des Sensors gezielt ausgelegt werden. Ggf. kann eine weitere zusätzliche Masse angebracht sein. Eine Möglichkeit zur Dämpfung besteht darin, insbesondere die Masse der Blende an einem Gehäusepunkt abzustützen, wobei der Biegeträger mehr oder weniger ausgelenkt bzw. abgestützt sein kann. Es ist weiterhin möglich, anstelle eines starren Begrenzers wie eine Gehäusewandung flexible Begrenzer einzufügen.

Die Vorzugsrichtung der Schwinger kann durch die Widerstandsmomente bestimmt werden. Die Verwendung von 2 parallelen, beabstandeten Fasern ist vorteilhaft. Bauform, Dicke und Werkstoff der Faser kann je nach Meßaufgabe verschieden sein. Die Schwingrichtung kann auch so begrenzt werden, daß die Blende mehr oder weniger seitlich geführt bzw. die Auslenkung z. B. über eine Gehäusewandung seitlich begrenzt ist.

Für eine wie oben angegebene Meßanordnung wird eine elektronische Methode angegeben, die vorteilhaft die Strörgrößen unterdrückt bzw. kompensiert, wenn insbesondere kurzzeitige und/oder periodische Größen auftreten.

Die Lösung sieht eine Meßstrecke in bekannter Anordnung vor, Sender, Empfänger, F1, ggf. F2, Blende, ggf. Reflektor, ggf. Faserbündel etc., bei dem der Meßwert gleichzeitig zur Regelung des Senders verwendet wird. Dies ist möglich, indem an einer Stelle des Regelkreises ein Zeitglied eingefügt wird. Da die Störgrößen eher relativ langfristig wirken bzw. keine Sprungfunktionen sind, bleibt die Spannung des Empfängers konstant. Nur wenn ein kurzzeitiges und/oder periodisches Signal auf den Sensor wirkt, ändert sich die am Empfänger abgegriffene und ggf. verstärkte Spannung als Funktion des Blendenweges. Je nach Anwendung ist ein P-Regler als Zeitglied ausreichend. Ein separates Zeitglied kann insbesondere hinter dem Regler, vor dem Differenzglied oder zwischen dem Regler und dem Differenzglied angeordnet sein. Der Meßwert wird vor dem Zeitglied abgegriffen, insbesondere am Empfänger oder an einem folgenden Verstärker. Diese Anordnung optischer und/oder elektronischer Element verzichtet vorteilhaft auf eine Referenzstrecke und bildet zudem den Meßwert direkt ab. Diese Lösung kompensiert besonders den Temperaturgang der PhD vorzüglich, da hier keine Temperaturgangunterschiede wie bei der direkten Referenzmessung auftreten.

An dieser Stelle wird kurz das Zeitverhalten der Störgrößen gezeigt. Insbesondere die Temperaturänderung an den Bauteilen ist, ggf. unterstützt durch isolierende Materialien, eine stetige Funktion. Ein signifikante Änderung der Temperatur ist innerhalb einiger Sekunden nicht möglich. Die beriebszeitbedingte Leistungsabnahme des Senders führt gleichfalls in Zeiträumen von Sekunden nicht zu einer Leistungsänderung. Das Zeitglied läßt jedoch nur sehr kurzzeitige und/oder periodische Signale, eben die Meßsignale, nicht auf das Stellglied wirken.

Ein Aspekt der Erfindung ist, den Referenzwert und den Meßwert über die Meßstrecke zu erfassen, wobei der Referenzwert die Störgrößen über einen Regler kompensiert. Entsprechend der Störgröße wird dann die Leistung der/des Senders angepaßt. Dazu werden Lösungen gezeigt, die die Optik und/oder die Elektronik einbeziehen.

Ein weiterer Aspekt der Erfindung beinhaltet Lösungen, die so konzipiert sind, daß die Störgrößen nicht beachtet werden müssen.

Um beliebige Zeitfunktionen messen zu können, ist eine weitere Lösung entwickelt worden. Auch hier wird auf eine explizite Referenzstrecke verzichtet. Der Referenzwert wird ebenfalls über die Meßstrecke erfaßt.

Zur Klärung wird dazu der Begriff optisches Segment, im weiteren einfach Segment genannt, definiert. Ein Segment stellt einen Raum dar, in dem Strahlung indirekt oder direkt von einem Sender zu einem Empfänger transportiert wird. In diesem Raum befindet sich eine Blende, welche definierte Teile der Strahlung abdeckt bzw. durchläßt oder reflektiert. Die Segmentgrenzen werden in Strahlrichtung durch optische Flächen bestimmt, die die Strahlung ein- (F1) und auskoppeln(F2). Je nach Realisation kann auch über F1 die Strahlung ausgekoppelt werden. In diesem Fall, oder auch, wenn die Fläche F2 auf der Seite wie F1 liegt, ist an der Blende anstelle der Öffnung ein Reflektor (R) angebracht. Ggf. kann der Reflektor auch hinter der Blende, insbesondere gegenüberliegend zu F1 (F2) angebracht sein.

Die Geometrie eines Segmentes wird definiert durch die Form der Flächen F1/F2 sowie durch deren Abstand in Strahlrichtung bzw. dem Abstand der Fläche zu einem Reflektor. Dieser Abstand wird Tiefe genannt. Die Tiefe ist bei der praktischen Auslegung optimal anzupassen, weil mit der Tiefe auch die Verlustleistung wächst.

Ein Segment stellt den Raum dar, in dem die Strahlung oder besser die Strahlungsintensität als Funktion des Blendenweges übertragen wird.

Die Segmente werden in der Regel mehrfach, insbesondere direkt nebeneinander angeordnet und besitzen die optischen Flächen F1X,F2X oder F1X,F2X,R oder F1X,R. Entsprechend wird das jeweilige Segment S1,..,SX genannt. Zu jedem Segment gehört ein Empfänger, mit dem im folgenden ein opto-elektronischer Wandler gemeint ist und/oder die optische Zuleitung vom Meßraum zum Wandler.

Im folgendem wird insbesondere das Segment zur Klärung genannt. Dabei wird vorausgesetzt, das die Segmente von einer oder mehreren Lichtquellen versorgt werden, daß Glasfasern oder andere opt. Medien an der Segmentbildung beteiligt sind, daß ggf. der Sender und der Empfänger selbst das Segment bilden, daß zu jedem Segment mindestens ein Empfänger gehört. Insbesondere sind die Segmente je nach Meßaufgabe gleich groß oder unterscheiden sich bezüglich der Länge in der Art, daß Segmente ein Vielfaches eines anderen Segmentes sein können. Die Länge kennzeichnet daß Maß, welches in Bewegungsrichtung der Blende steht. Trotz gleicher Flächen auftretende Leistungsunterschiede von U(S1max), U(S2max) ... werden durch Wahl der Verstärkungsfaktoren K1, K2,... der Verstärker kompensiert, die hinter den PhD angeordnet sind. An dieser Stelle soll deutlich gemacht werden, daß der Begriff Empfänger in der Regel eine Photodiode und ebenfalls auch einen hintergeschalteten Verstärker definieren kann. Die Verstärker werden auch dazu verwandt, die individuellen Eigendämpfungen der Segmente zu kompensieren. Die Einstellung der Verstärker erfolgt insbesondere Segmentweise. Der Regelkreis wird dazu unterbrochen, der oder die Sender z.B. von einer Konstantstromquelle versorgt. Im weiteren wird diese Dämpfungskompensation nicht weiter betrachtet und unter dem Begriff Empfänger subsumiert.

Die Wellenlänge der Strahlung ist von untergeordneter Bedeutung. Insbesondere ist bei Verwendung von opt. Fasern die Dämpfungscharakteristik als Funktion der Wellenlänge zu beachten. Wichtig ist, das die Strahlungsintensität über der Fläche weitgehend homogen ist.

Die Blende wird entweder von einem Transformationselement betrieben oder ist selbst gleichzeitig das Transformationselement. Der Begriff Transformationselement ist soweit variabel, daß ggf. sogar ein einfaches Bauteil zur Übertragung von Wegänderungen gemeint sein kann. Die Blende kann je nach Ausführungsform rund oder eckig sein. Sie hat eine Öffnung oder einen Spiegel in der Größe eines Segmentes oder mehrerer Segmente. Die Bewegung der Öffnung oder des Spiegels und damit der Blende orientiert sich an der Anordnung der Segmente. Die Blende kann eine oder mehrere unterschiedlich angeordneter Öffnungen oder Spiegelflächen aufweisen.

Den erfinderischen Gedanken zeigt die funktionale Wirkung des Zusammenspiels besagter Segmente und der Blende. Wird die Blende in den Segmenten bewegt, bleibt die Summenleistung der Segmente konstant. Die Einzelleistung der Segmente ist aber eine Funktion des Blendenweges.

Ein Anspruch der Erfindung, die Meßstrecke auch zur Regelung zu verwenden, ist dadurch realisiert, daß die Summe der Segmentleistungen an jedem Ort der Blende bzw. deren Öffnung konstant ist. Die angeschlossenen Empfänger bilden in der Summe eine konstanten Wert. Dieser wird zur Regelung des oder der Sender benutzt. Unter Segmentleistung ist der output des aktivierten Segmentes zu verstehen, gleichfalls repräsentiert durch den output des Empfängers.

Der andere Anspruch, eben den störgrößenkompensierten Meßwert herzuleiten, wird erfüllt, indem die Segmentleistungen separat verwertet werden. Die Segmentleistung ist abhängig vom Blendenweg und so analog zur phys. Größe. Die über die Empfänger, insbesondere in eine Spannung gewandelte Segmentleistung, kann wahlweise beliebig mathematisch verknüpft werden. Die Ausgangssignale sind je nach Aufgabe zu addieren, jeweils mit einem Faktor zu multiplizieren oder zu einer Konstanten zu addieren etc. bzw. werden aus einer Kombination mathematischer Operationen verknüpft. Je nach Meßaufgabe kann es sinnvoll sein, abhängig von einem Grenzwert, die Segmentspannungen für die Meßwertbildung ab- bzw. einzuschalten. Durch die unterschiedlichen Rechenschritte lassen sich viele, auch unstetige, Funktionen der zu messenden phys. Größe nachbilden oder darstellen.

Die im letzten Abschnitt angegebenen Rechenschritte können auch für die Referenzwertbildung eingesetzt werden, um so z.B. über die Variation der Strahlungsleistung phys. Größen nachzubilden.

Eine weitere Methode zur Unterdrückung der Störgrößen sowie zur Vereinfachung des Meßsystems sieht vor, auf eine Regelung vollständig zu verzichten und stattdessen quasi digital zu arbeiten. Hierzu werden die Segmente getrennt angeordnet, insbesonders auf einer Linie beabstandet. Die optischen Flächen der Segmente werden dabei insbesondere durch Fasern realisiert. Passiert die Blende S1, wird Schalter 1 aktiviert, Bei S2 Schalter 2 usw. Dazu wird ein Spannungspegel definiert, der z.B. bei < 2Volt einer logischen "0" und bei > 2 Volt einer "1"entspricht.

Verliert der Sender nach 10**5 h die Hälfte seiner Leistung, und verringerte sich die äquivalente Spannung von 8 auf 4 Volt, ist dieser Meßaufnehmer weiterhin betriebstüchtig. Diese Gestaltung ist dann interessant und ausreichend, wenn nur bestimmte Belastungsklassen ermittelt werden sollen. So wird z. B. an den Impuslaufnehmer bei einer Anwendung die Forderung gestellt, beim erreichen 3 unterschiedlicher Impulsgrößen eine jeweils entsprechende Warnmeldung zu signalisieren.

Eine digitale Erfassung mit 2**n Bits gewährleisten n geordnete Segmente und eine Blende, deren Reflektoren oder Öffnungen ein digitales Muster zeigen. Ggf. ist die Blende einfach ausgelegt und die Segmente bilden das digitale Muster.

Für die Anwendung der Sensoren kann es weiterhin notwendig sein, das der Sensor nur von einer Seite optisch betrieben wird. Insbesondere dann, wenn die Anwendung nur denn Zugang von einer Seite erlaubt. In dem Fall sind die Flächen F1X/F2X auf insbesondere einer Seite anzuordnen. Die Realisation der Segmente erfolgt dann durch die Verwendung eines Spiegels. Dieser ist wahlweise an der gegenüberliegenden Wandung oder auf der Blende selbst fixiert.

Eine weitere Lösung dazu, den Sensor nur von einer Seite zu betreiben - das heißt Strahlung ein- und auszukoppeln - besteht darin, Segmente mit jeweils nur einer Fläche F1 zu verwenden. Diese Lösung ist insbesondere bei der Verwendung von optischen Fasern oder Bündeln daraus von Bedeutung. Zwischen dem Sender und der Fläche F1 ist dazu ein Strahlteiler eingefügt. Dieser läßt die Strahlung vom Sender zur Fläche F11 (F12,...) durch, koppelt die zurückgestrahlte Strahlung jedoch aus und führt diese so zum Empfänger. Besonders bei großen opt. Leitungslängen kann so zudem Material eingespart werden.

Für weitere Meßaufgaben können die Segmente vorteilhaft auch als Matrix ausgelegt sein, wodurch ebene Bewegungen erkannt bzw. gemessen werden können.

Vorteilhafte Anwendungen mit den vorgestellten opto-elektronischen Sensorprinzipien können insbesondere erzielt werden, wenn die Segmente kreisringförmig angeordnet sind. Wird die Blende schwimmend oder mit einem Schwerpunkt außerhalb der Drehachse gelagert, können so Neigungen gemessen werden. Wird die Blende von einer externen Welle betätigt, werden deren Umdrehungen, Drehwinkel etc. aufgezeichnet. Insbesondere ist zudem die Messung eines Drehmoments, z.B. an einem Drehmomentenschlüssel, möglich. Durch eine magnetisch orientierte Blende bzw. ein solches Transformationselement kann weiterhin die Richtung gemessen werden. Werden die Segmente in einer Richtung angeordnet, können so Wege oder Wegänderungen bzw. ableitbare Größen gemessen werden.

Bei der Verwendung mehrerer Segmente kann die Anordnung auch dazu verwendet werden, daß diese als Redundant ausgelegt gilt. In diesem Fall bildet jedes Segment einen eigenen Meßwert, der gleichzeitig zur Kontrolle des/der anderen dient.

Vorteilhafte Anwendungen optischer Sensoren finden sich auch dort, wo elektromagnetische Strahlung auftritt oder die Verwendung von stromführenden Leitern untersagt ist. Für die Überwachung des Stromaufnehmers einer Bahn können Impuls oder Beschleunigungsaufnehmer eingesetzt werden. Diese Erfassen Stöße auf den Kohlekörper und melden so Fehler der Oberleitung. Werden mindestens zwei dieser Sensoren beabstandet eingesetzt, läßt sich über die Phasenverschiebung der Signale der Ort der Störung, bezogen auf die Länge des Stromabnehmers oder Schleifkörpers ermitteln. Schäden der Oberleitung lassen sich so rechtzeitig ermitteln. Die Lage der Oberleitung kann gemessen werden, indem der Schleifkörper bzw. dessen Halterung außen auf zwei optischen Kraftmeßdosen gelagert ist. Durch die Verschiebung der Andrucklinie ermittelt sich die Lage z. B. nach der Gleichung X=(Fb - Fm/2)/(Fa+Fb-Fm).

**Mögliche** **Ausführungsformen** **der** **Erfindung** **werden** **in** **den Zeichnungen** **skizziert** **und** **im** **folgendem** **näher** **erläutert**.

**Es** **zeigt:**

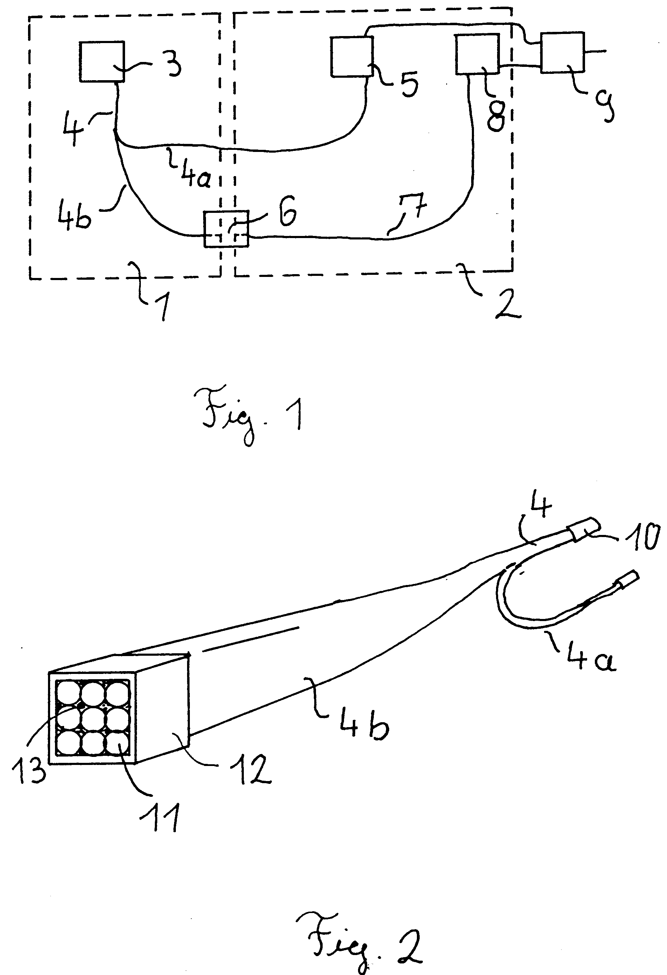

**Fig.** **1:** eine typische optische Sende- 1 und Empfangseinheit 2. Der Strahler 3, z.B. eine LED, die im infraroten Bereich strahlt, strahlt in ein Lichtwellenleiterbündel 4. Aus dem Bündel werden eine oder mehrere LWL 4a herausgegriffen und direkt einem Photodetektor 5, z.B. einer Photodiode die im infraroten Bereich arbeitet, zugeführt. Das Faserbündel 4b transportiert die Strahlung direkt zum Meßraum 6. Beabstandet von der Austrittsfläche des LWL-Bündels 4b des Senders 1 ist die Einstrahlfläche des Faserbündels 7 des Empfängers 2 angeordnet. Die geschliffenen und/oder polierten Ein- und Austrittsflächen stehen sich insbesondere direkt und parallel gegenüber. Die Flächen sind in optimaler Anordnung identisch, ebenso wie die Seitenlängen. Das LWL-Bündel 7 transportiert die Strahlung zum Photodetektor 8. Dieser stellt analog zur transportierten Strahlung ein elektrisches Signal bereit. Leistungsschwankungen oder Änderungen des Strahlers 3 werden kompensiert, indem die Signale der Referenzmessung, Photodetektor 5, und der Übertragungsmessung, Photodetektor 8, dividiert werden. Der Umkehrverstärker 9 stellt dann das Signal bereit, welches unabhängig von Leistungsschwankungen des Strahlers 3 ist.

**Fig.** **2:** eine mögliche Konfiguration des Lichtwellenleiterbündels 4 des Senders 1. Die Eintrittsseite ist hier eine runde Hülse 10, in der die LWL 11 eingebettet bzw. eingeklebt sind. Die Hülse kann im einem Steckplatz durch eine Verschraubung fixiert sein. In der Form, daß die Hülse in einer Bohrung steckt und senkrecht von einer Schraube geklemmt wird. Gegenüber der Hülse befindet sich ein Steckplatz für den Strahler. Dieser kann ebenso fixiert sein. Die Austrittsseite des LWL-Bündels 4b ist in der gezeigten Ausführung rechteckig. Die LWL 11 sind in einer rechteckigen Hülse 12 eingebettet, insbesondere eingeklebt. Angedeutet wird die zur Referenzmessung benötigte LWL-Menge 4a. Durch einen Kleber, z. B. ein EP-Harz, wird ein fester Verbund zwischen LWL und Hülse hergestellt und die Matrix 13 aufgebaut.

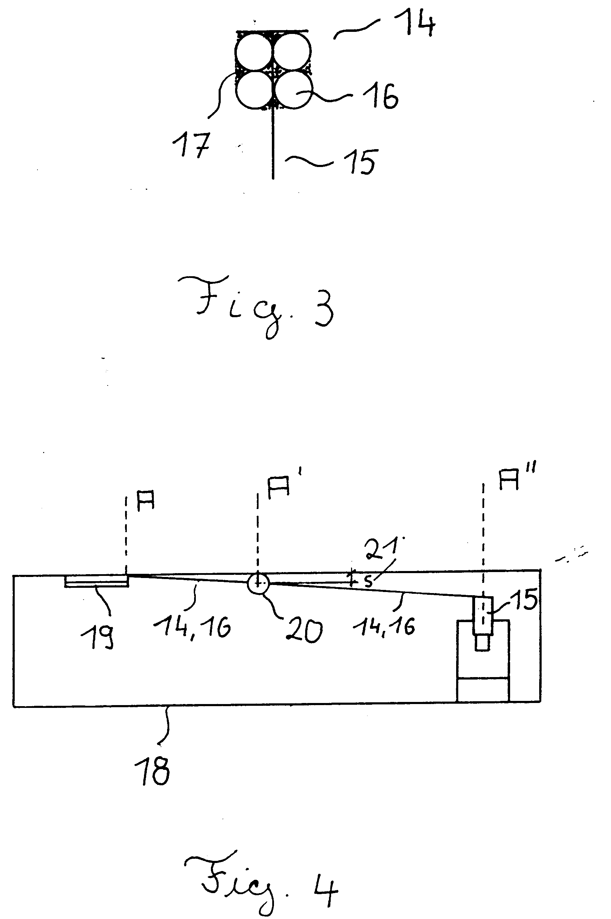

**Fig.** **3:** die Stirnseite eines Biegeträgers 14 mit Blende 15. Der Biegeträger ist aus vier Fasern 16 aufgebaut. Die Blende 15 ist über eine Matrix 17 mit den Fasern verklebt. Ebenfalls sind so die Enden der Fasern 16 an der Stirnseite miteinander verbunden.

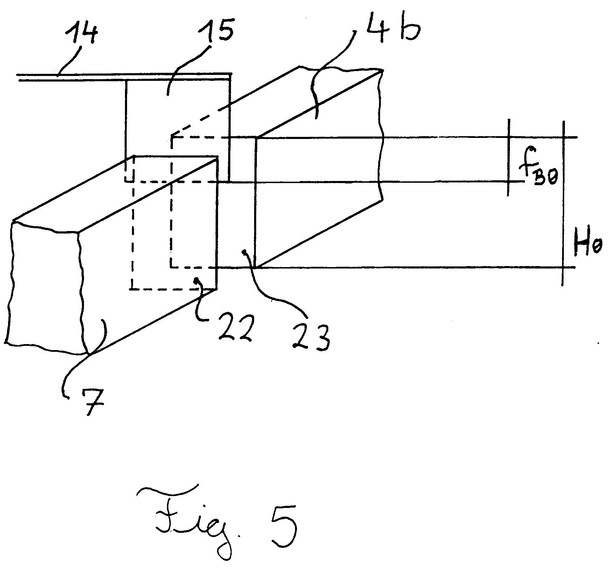

**Fig.** **4:** den Aufbau eines Impulsaufnehmers. Der Biegeträger 14 ist hier eine einzelne Faser 16. Die Faser ist an einer Innenseite des Gehäuse 18 fixiert, hier an dessen Oberseite. Die Faser ist geklebt bzw. über ein Plättchen 19 geklemmt. Beabstandet vom Festpunkt 19 ist die Masse M 20 fixiert, insbesondere geklebt. Die Höhe S 21 vom oberen Punkt der Masse zur Mittellinie der Faser 16 ist größer als die Durchbiegung f der freien, mit der Masse beaufschlagten Faser an dieser Länge.

So wird die Masse analog des Auslenkweges S-f an die obere Gehäuseinnenwand gedrückt und die Faser im Bereich A-A' zusätzlich zum Eigengewicht vorgespannt. Am Punkt A'' ist die Blende 15 fixiert. Über die Abmessungen A-A',A'-A'', die Anzahl und die Fläche der Fasern sowie deren Materialien und durch die Masse M wird das Schwingverhalten eingestellt.

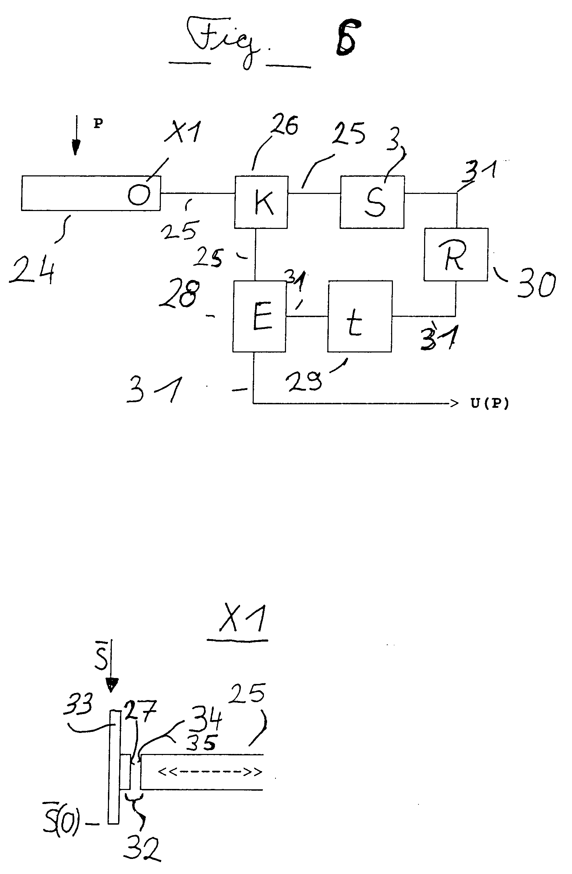

**Fig.** **5:** die sich gegenüberliegende Ein- 22 und Austrittsfläche 23 des Senders 1 und des Empfängers 2, wobei wieder geometrisch geordnete LWL-Bündel (4b,7) angedeutet werden. Die Eintauchtiefe der Blende in Ruhelage des Biegeträger, wie sie für verschiedene Meßaufgaben vorteilhaft ist, wird ebenfalls durch die Strecke fB0 angedeutet.

**Fig.** **6:** Einen Aufnehmer 24 für Impulse. Der Sender 3 strahlt über ein optisches Medium 25, hier LWL, in einen Koppler 26. Der Koppler läßt die Strahlung passieren. Vom Koppler aus wird die Strahlung zum Impulsaufnehmer geleitet und dort über einen Reflektor 27 zurückgeführt; in Abhängigkeit von der Auslenkung der Blende. Die zurückgeführte Strahlung wird vom Koppler 26 ausgegoppelt und zum Empfänger 28 geführt. Das elektrische Signal des Empfängers versorgt über ein Zeitglied 29 eine Reglereinheit 30. Diese Reglereinheit beinhaltet alle Komponenten zur Bildung des Regelkreises (Regler, Stellglied, Differenzglied (Z-Diode) etc.) und wirkt so auf den Sender 3. Gleichzeitig wird am Ausgang des Empfängers 28 der Meßwert über den elektrischen Leiter 31 abgegriffen.

Die **Teilansicht** **X1** zeigt hierzu ein optische Medium 25, das Segment 32(6) sowie einen an einer Blende 33 fixierten Reflektor 27. Aus der Fläche F1 3 tritt Strahlung aus und wird über den Spiegel zu F1 zurückgeführt. Verändert sich die Position der Blende, wird die zurückgeführte Leistung entsprechend vermindert und wird so zum Maß der auf dem Aufnehmer wirkenden Größe. Das Transformationsprinzip, hier eine mit einer Masse versehenen, besonders gelagerten Faser an dem die Blende fixiert ist, wird nicht weiter betrachtet.

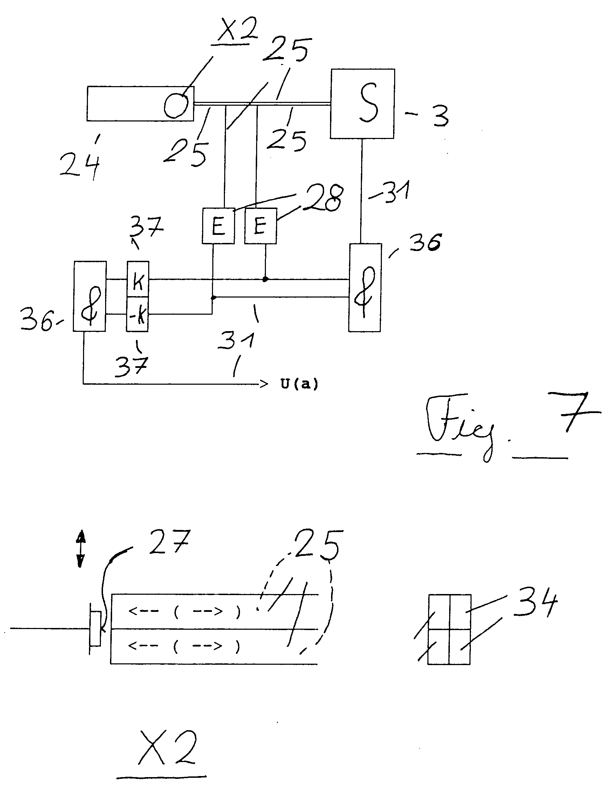

**Fig.** **7:** Einen Aufnehmer 24 für Beschleunigungen. Der Sender 3 versorgt den Aufnehmer direkt, hier über 2 LWL-Bündel 25. Die **Teilansicht** **X2** zeigt das Funktionsprinzip im Aufnehmer. Über die vom LWL-Bündel gebildeten Flächen F11, F12 34 strahlt Licht zu einem Reflektor, der vorteilhaft die Form eines Prismas haben kann. Über den Reflektor 7 wird das Licht in die optischen Flächen F21, F22 35 eingeleitet und über die dazugehörigen LWL-Bündel 25 zu den zwei Empfängern 2 geleitet. Die Ausgänge der Empfänger 2 werden addiert 36 und zur Regeleinheit weitergeleitet. Gleichzeitig werden die Ausgänge der Empfänger 28 zur Meßwertbildung verwendet. Hier in der Form, das ein Signal über den Verstärker 37 mit -K multipliziert wird, das andere Signal mit +K. Die output der Verstärker wird mit einem Addierer 36 addiert und zeigt die Funktion U(a). In der Nullstellung der Blende gibt die Summe dann den Wert Null. Wirkt eine Beschleunigung, ändert das Transformationselement die Position der Blende. In der Folge werden die Ausgänge der Verstärker 37 verschieden große Werte annehmen. Die Addition führt dann zu einem der Beschleunigung proportionalen positiven oder negativen Wert U(a).

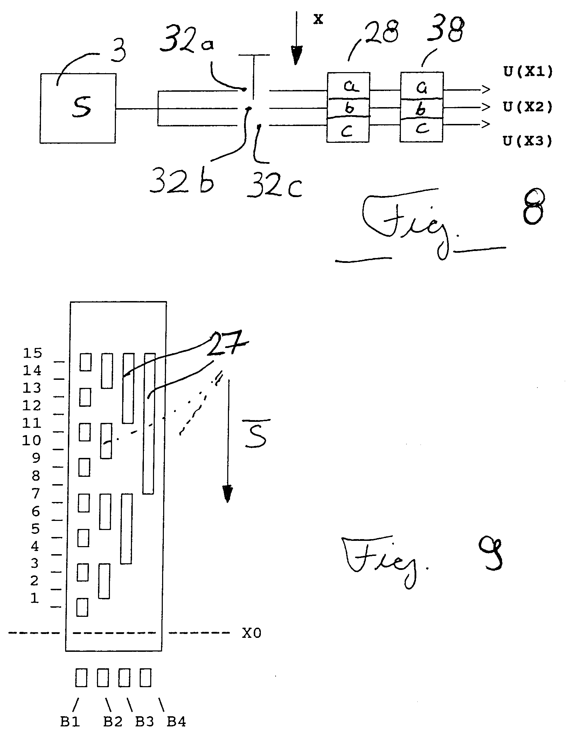

**Fig.** **8:** zeigt ein quasi digitales Meßprinzip. Der Sender 3 versorgt hier 3 Segmente 32 a,b,c. Durch das Eintauchen der Blende werden die beabstandeten Segmente deaktiviert. Über die Empfänger 28 ändert sich dann der Zustand der Komperatoren 18 a,b,c und damit U(X,X=1,2,3)).

**Fig.9:** zeigt eine Blende mit einem digitalem Raster. Das Raster wird durch Öffnungen 27 oder Spiegel 27 erzeugt. Das hier gezeigte Prinzip ist für 4 Bit ausgelegt. Unter der Blende sind die Segmente dargestellt. Segment 1 steht für das 1. Bit, S2 für das 2. usw. In meßtechnischer Anordnung befinden sich die Segmente auf der Höhe der Linie X0 und sind damit deaktiviert. Verschiebt sich die Blende über den Segmenten, aktivieren die Öffnungen oder Reflektoren S1 - S4 in der Form, daß diese den digitalen Wert des Weges repräsentieren. In umgekehrter Darstellung wären die Öffnungen/Spiegel als Segmente aufzufassen und die Segmente als Spiegel/Öffnungen.

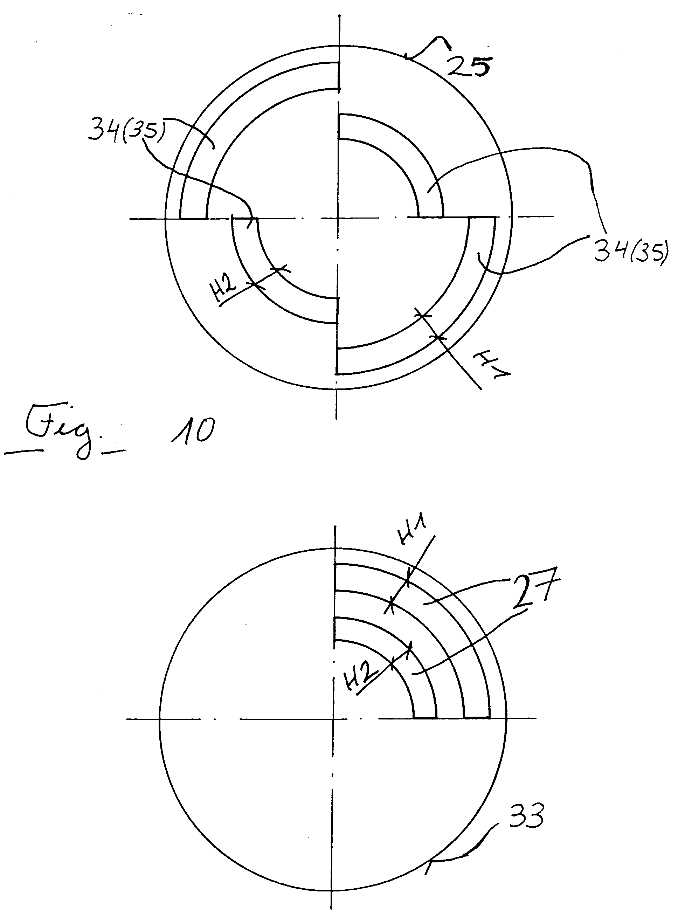

**Fig.** **10:** Einen Leiter 25, hier als Profilfaser ausgebildet. Die Segmente werden hier durch die Flächen 34 bzw. 35 gebildet, Die optischen Flächen entsprechen den leitenden Teilen der Profilfaser. Zur optischen Trennung sind die Flächen versetzt angeordnet. Die dazugehörige Blende 33 zeigt 2 Öffnungen 27 oder Reflektoren 27 innerhalb eines Viertelkreises. Die Segmente und die Reflektoren sind insbesondere Deckungsgleich bei einer Anordnung um den Mittelpunkt. Bei einer Drehung aktiviert die Blende nacheinander ein äußeres und/oder ein inneres Segment bzw. ein inneres und/oder ein äußeres Segment. Die max. Einzelleistung der Segmente kann ggf. auch über die Höhe H1 bzw. H2 der Blende bzw. der Flächen angepaßt werden.

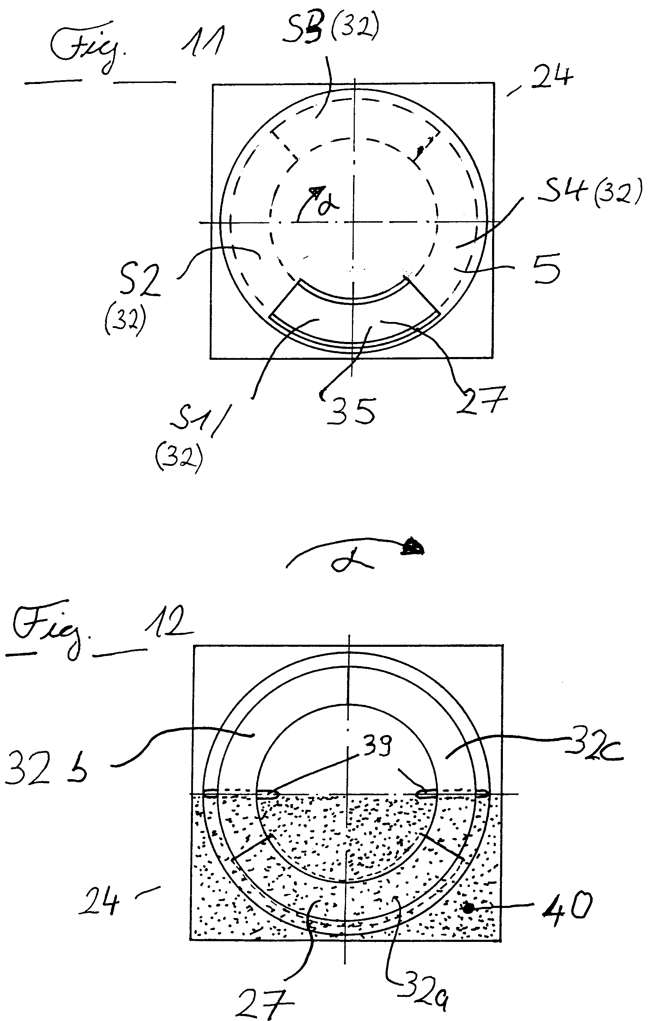

**Fig.** **11:** Einen Aufnehmer 24 für Drehbewegungen. Es wird ein Schnitt durch ein Gehäuse gezeigt, mit Blick auf die Blende 33. Der Ausschnitt der Blende ist die Öffnung 7 und läßt auf die zu S1 32 gehörende Fläche F21 35 blicken. Hier ist die Fläche F21 entsprechend mit einer sichtbaren Linie dargestellt. Die seitlich begrenzenden Linien fallen mit denen der Öffnungen zusammen. Es ist deutlich zu erkennen, daß die Höhe der Öffnung nicht identisch ist mit der Höhe des Segmentes bzw. F21. Die vollständige Überdeckung der Höhe ist nicht unbedingt zwingend. Im weiteren Verlauf sind die Segmente durch eine gestrichelte Linie gezeigt. Diese zeigt den verdeckten Verlauf der Flächen F22, F23 und F24. Die gezeigte Anordnung mißt Winkel, Drehwinkel etc. Dabei kommt es an einem Punkt zu einer Unstetigkeit. Dann, wenn der Drehwinkel größer 360° wird. Hier soll zur einfacheren Erfassung wieder mit Null begonnen werden. Die Elektronik ist wie folgt auslegbar. Der output der Segmente wird über einem Verstärker hinter dem Empfänger mit einem konstanten Faktor belegt. U(S1) mit 0,5, U(S2) mit 1, U(S3) mit 2, U(S4) mit 4. Die Spannungen für das Meßsignal werden hinter diesen Verstärkern addiert. Mit zunehmenden Winkel nimmt so die Spannung hinter dem Addierer linear zu und ist so ein Maß für den Winkel. Ein kritischer Winkel ist, wie oben gesagt, der Winkel mit 360°. Bewegt sich die Öffnung von S4 nach S1, würde der Anteil der Spannung von S4 den Meßwert verfälschen. Dies wird so unterdrückt, indem dann, wenn U(S1) größer als U(Slmin)) ist, U(S4) durch einen elektronischen Schalter ausgeschaltet wird. Dieser Schalter wird von U(S1) betätigt. Der Schalter ist zum Beispiel hinter Dem Empfänger 4 angeordnet. Die Referenzmessung funktioniert wieder in bekannter Weise. Direkt hinter den Empfängern wird die Spannung zu einem Addierer geleitet der den Ist-Wert für die Regelung darstellt. Je nach Ausführung wird die Blende direkt über eine aus dem Gehäuse ragende Welle gedreht.

**Fig.** **12:** Einen Aufnehmer 24 für Neigungen. Hier wird das Gehäuse relativ zur Horizontalen gedreht. Die Blende 33 ist zusätzlich über 2 Schwimmer 39 gelagert, die durch eine transparente und mehr oder weniger viskose Flüssigkeit 40 im Gehäuse die Blende ausrichtet. Durch die Drehung des Gehäuses stellt sich so eine relative Drehung der Blendenöffnung 27 zu den Segmenten 32 a,b,c ein. Für Neigungen im Bereich +/- 90° eignet sich die Meß- und Referenzwertbildung gemäß der Elektronik nach Fig. 2. Für Neigungen im Bereich +/- 180° wird eine anderes Konzept für die Elektronik des Meßwertes angegeben. Bei positiven Drehungen über 90° wird U(S2) anders verstärkt, insbesondere so, daß die Spannung von U(S2max) = 2 U(S3max). Dieser Zustand wird durch aktivieren von S1 wieder zurückgeschaltet U(SXmax,X:=1,2,3,)=C. Ebenso wird für negative Drehungen bis -180° Grad vorgegangen. Bei den vorgestellten Aufnehmern ist jeweils auf konstruktivem Weg der Meßbereich zu begrenzen.

Die Erfindung ist nicht auf die gezeigten Ausführungen beschränkt sondern sieht weitere erfindungsgemäße Ausführungsformen, insbesondere durch Variation der Optik und Elektronik, vor.

## Patentansprüche

1. Optoelektronischer Sensor für physikalische Größen, bei dem die Strahlungsintensität zwischen mindestens einem Sender und mindestens einem Empfängers über ein Transformationselement respektive einer daran fixierten Blende variiert wird und so die phys. Größe darstellt, dadurch gekennzeichnet, daß die auf die optoelektronischen Bauteile wirkenden Störgrößen direkt über den Meßwert erkannt, kompensiert und/oder unterdrückt werden und somit der Meßwert ohne weitere mathematischen Verknüpfungen mit einem Referenzwert zur Verfügung steht.

2. Sensorvorrichtung nach Anspruch 1, dadurch gekennzeichnet, daß mindestens ein Sender und mehrere Empfänger sowie ggf. optische Medien wie Lichtwellenleiter etc. so zu optischen Segmenten, in denen die Blende wirkt, zusammengefaßt werden, daß die Summe der Segmentleistung respektive der Empfängerleistung konstant oder eine bekannte Funktion ist und so den Ist-wert für eine Regelung zur Kompensation der Störgrößen darstellt und gleichzeitig die einzelnen Segmentleistungen die phys. Größe abbilden.

3. Sensorvorrichtung nach Anspruch 1 oder 2, dadurch gekennzeichnet, daß insbesondere die Summe der aktivierten Segmente zur Regelung des Senders verwendet werden und die jeweils aktiven einzelnen Segmente, ggf. beliebig mathematisch verknüpft und/oder bewertet, den Meßwert darstellen.

4. Sensorvorrichtung nach Anspruch 1 bis 3, dadurch gekennzeichnet, daß der output des oder der Empfänger/s für die Meßwertbildung und/oder die Referenzwertbildung beliebig mathematische weiterbehandelt wird, die Signale insbesondere unterschiedlich verstärkt und/oder addiert werden und sich ggf. gegenseitig über einen elektronischen Schalter für folgende Operationen zu- oder abschalten.

5. Sensorvorrichtung nach Anspruch 1 bis 4, dadurch gekennzeichnet, daß die Blende mindestens eine Öffnung oder einen Reflektor aufweist, wobei insbesondere deren Länge mit der Länge einer oder mehrerer optischer Segmente identisch ist.

6. Sensorvorrichtung nach einem der Ansprüche 1 bis 5, dadurch gekennzeichnet, daß die Länge der optischen Segmente bzw. die der optischen Flächen zueinander im Verhältnis ganzer positiver Zahlen bzw. daraus gebildeter Brüche steht und das die Segmente insbesondere direkt aneinander angeordnet sind.

7. Sensorvorrichtung nach einem der oben genannten Ansprüche, dadurch gekennzeichnet, daß die maximale Leistung eines Segmentes identisch ist mit der maximalen Leistung eines jeweils anderen Segments bzw. die Unterschiede in der Leistung durch Verstärker, insbesondere hinter den Photodioden angeordnet, kompensiert werden.

8. Sensorvorrichtung nach einem der oben genannten Ansprüche, dadurch gekennzeichnet, daß zum Aufbau der Segmente insbesondere optische Fasern, Faserbündel oder Profilfasern verwendet werden, wobei die Ein- und/oder Austrittsfläche bezüglich des Meßraums insbesondere so gestaltet ist, daß lineare Funktionen realisiert werden.

9. Sensorvorrichtung nach einem der oben genannten Ansprüche, insbesondere für kurzzeitige bzw. periodisch wirkende phys. Größen, dadurch gekennzeichnet, daß diese insbesondere ein optisches Segment aufweist und ebenfalls eine Referenzmessung dadurch ersetzt, daß das gewandelte optische Signal gleichzeitig den Ist-Wert für einen Regelkreis darstellt sowie direkt auch den störgrößenkompensierten Meßwert abbildet, indem im Regelkreis ein explizites oder implizites Zeitglied angeordnet ist.

10. Sensorvorrichtung nach einem der oben genannten Ansprüche, dadurch gekennzeichnet, daß die elektronisch weiterverarbeitete Segmentleistung einem Regelkreis und/oder einem Rechner zugeführt wird.

11. Sensorvorrichtung nach einem der oben genannten Ansprüche, dadurch gekennzeichnet, daß eine Blende von einem Biegeträger betrieben wird, an dem eine weitere Masse angebracht sein kann.

12. Sensorvorrichtung nach einem der oben genannten Ansprüche, dadurch gekennzeichnet, daß der Biegeträger aus Fasern gebildet wird, insbesondere aus Glas- oder Quarzglasfasern.

13. Sensorvorrichtung nach einem der Ansprüche 11 oder 12, dadurch gekennzeichnet, das die Blende oder eine zusätzliche Masse insbesondere durch eine Gehäusewandung abgestützt oder ausgelenkt sein kann.

14. Sensorvorrichtung nach einem der oben genannten Ansprüche zur Einteilung der Meßwerte in Klassen bzw. zur diskontinuierlichen oder quasi digitalen Messung, die insbesondere auf einen Regelkreis und eine Referenzmessung verzichtet, dadurch gekennzeichnet, daß die Segmente insbesondere beabstandet angeordnet sind, wobei die durch eine Blende aktivierten oder deaktivierten Segmente bzw. deren Ausgangssignale abhängig von einem Grenzwert eine logische Größe darstellen.

15. Sensorvorrichtung nach einem der Ansprüche 1 bis 14 zur digitalen Erfassung der Meßwerte, dadurch gekennzeichnet, daß die Blende oder die Segmente ein digitales Muster zeigen.

16. Sensorvorrichtung nach einem der Ansprüche 1 bis 15 zur Erfassung von Drehwinkeln, Neigungen etc, dadurch gekennzeichnet, daß mehrere, insbesondere gleich große Segmente kreisringförmig angeordnet sind, und diese durch eine drehbar gelagerte, indirekt oder direkt betriebene Blende mehr oder weniger aktiviert werden.

17. Sensorvorrichtung nach Anspruch 16 zur Messung von Richtungen, dadurch gekennzeichnet, daß die insbesondere flüssig gelagerte Blende magnetfeldorientiert ist oder von einem magnetfeldorientierten Transformationselement betrieben wird.

18. Anwendung nach einem der Ansprüche 1 bis 17, bei der die optische Versorgung insbesondere von einer Seite aus erfolgt, dadurch gekennzeichnet, daß die Flächen F1X, F2X insbesondere auf einer Seite angeordnet sind, und die Strahlung insbesondere über einen Spiegel an der Blende oder einem den Flächen gegenüberliegenden Spiegel zurückgekoppelt wird.

19. Anwendung nach einem der Ansprüche 1 bis 18, bei der die optische Versorgung insbesondere von einer Seite aus erfolgt, dadurch gekennzeichnet, das die Segmente nur jeweils eine optische Fläche F1X aufweisen, über die die Strahlung ein- und mittels Spiegel abhängig vom Blendenweg ausgekoppelt wird, wobei zwischen dem/den Sender/n und den/ der opt. Fläche/n F1X mindestens ein Koppelelement, insbesondere halbdurchlässige Spiegel, angeordnet sind, die die zurückgeführte Strahlung auskoppeln und so dem oder den Empfänger/n zuführen.

20. Anwendung nach einem der Ansprüche 1 bis 19, dadurch gekennzeichnet, daß jeweils mindestens 2 Segmente sich gegenseitig überwachen.

21. Anwendung nach einem der Ansprüche 1 bis 19, dadurch gekennzeichnet, das nur ein Sender mindestens 2 Segmente betreibt und ein Segment von der Blende nicht verändert wird und ausschließlich zur Regelung des Senders genutzt wird, wobei das oder oder die weitere/n Segment/e direkt den störgrößenkompenzierten Meßwert abbilden.

22. Verwendung optischer Sensoren zur Ermittlung von Oberleitungsstörungen bzw. -schäden elektrifizierter Strecken, dadurch gekennzeichnet, daß insbesondere Impuls-, Stoß- oder Beschleunigungssensoren am Stromabnehmer und/oder der Fassung des Schleifkörpers oder einer Halterung angebracht sind.

23. Anwendung nach Anspruch 22, dadurch gekennzeichnet, daß der Störungsort über mindestens 2 beabstandete optische Aufnehmer durch die Laufzeitmessung bzw. die Phasenverschiebung der Signale ermittelt wird.

24. Verwendung von optischen Sensoren zur Ermittlung der Oberleitungslage am Schleifkörper einer Bahn, dadurch gekennzeichnet, daß der Schleifkörper bzw. dessen Halterungen auf mindestens einer optischen Kraftmeßdose gelagert ist.
